# FASCICULE DE BREVET EUROPEEN

(11) **EP 1 409 117 B1**
(45) Date de publication et mention de la délivrance du brevet: **15.09.2010**
(21) Numéro de dépôt: 02787161.5
(22) Date de dépôt: 16.07.2002
(51) Int. Cl.: B01D 63/08, B01D 65/08

(54) **DISPOSITIF DE FILTRATION DYNAMIQUE A DISQUE ROTATIF.**
DREHSCHEIBENVORRICHTUNG ZUR DYNAMISCHEN FILTRATION
ROTARY-DISC DEVICE FOR DYNAMIC FILTERING

(30) Priorité: 16.07.2001 FR 0109487
(43) Date de publication de la demande: 21.04.2004
(73) Titulaire: CENTRE NATIONAL DE LA RECHERCHE SCIENTIFIQUE (CNRS), 75794 Paris Cedex 16 (FR); P.R.O.G.R.E.S.S. Environement- Partenariat - Recherches - Optimisation - Gestion - Realisation - Equipement Speciaux - ..., 53140 Lignieres Orgeres (FR)
(72) Inventeur: BOULNOIS, Pascal, André, Charles, F-60170 Dreslincourt (FR); BOUZERAR, Roger, F-80100 Abbeville (FR); JAFFRIN, Michel, Yves, F-60200 Compiegne (FR); PAULLIER, Patrick, Roger, Daniel, F-60150 Thourotte (FR)
(74) Mandataire: Michelet, Alain
(86) Numéro de dépôt international: PCT/FR2002/002535
(87) Numéro de publication internationale: WO 2003/008077

(56) Documents cités:
- WO-A-95/00231
- WO-A-96/01676
- DE-A- 19 624 176
- FR-A- 2 203 664
- FR-A- 2 771 305
- US-B1- 6 209 727
- PATENT ABSTRACTS OF JAPAN vol. 018, no. 680 (C-1291), 21 décembre 1994 (1994-12-21) & JP 06 269642 A (TOTO LTD), 27 septembre 1994 (1994-09-27) & DATABASE WPI Derwent Publications Ltd., London, GB; AN 1994-346299 & JP 06 269642 A
- PATENT ABSTRACTS OF JAPAN vol. 018, no. 680 (C-1291), 21 décembre 1994 (1994-12-21) & JP 06 269643 A (TOTO LTD), 27 septembre 1994 (1994-09-27) & DATABASE WPI Derwent Publications Ltd., London, GB; AN 1994-346300 & JP 06 269643 A
- PATENT ABSTRACTS OF JAPAN vol. 018, no. 588 (C-1271), 10 novembre 1994 (1994-11-10) & JP 06 218245 A (TOTO LTD), 9 août 1994 (1994-08-09) & DATABASE WPI Derwent Publications Ltd., London, GB; AN 1994-290158 & JP 06 218245 A
- PATENT ABSTRACTS OF JAPAN vol. 018, no. 437 (C-1238), 16 août 1994 (1994-08-16) & JP 06 134267 A (NORITAKE CO LTD;OTHERS: 01), 17 mai 1994 (1994-05-17)
- PATENT ABSTRACTS OF JAPAN vol. 017, no. 086 (C-1028), 19 février 1993 (1993-02-19) & JP 04 281829 A (NGK INSULATORS LTD), 7 octobre 1992 (1992-10-07) & DATABASE WPI Derwent Publications Ltd., London, GB; AN 1992-384752 & JP 04 281829 A

## Description

La présente invention se rapporte à un dispositif de filtration dynamique modulaire à disque(s) rotatif(s) comprenant des membranes disposées de part et d'autre de plaques-supports fixes. La modularité permet la polyvalence du dispositif de filtration selon l'invention, qui peut être adapté par l'utilisateur à une utilisation allant des faibles pressions jusqu'aux pressions élevées, supérieures à 20 bars, c'est-à-dire de la microfiltration jusqu'à la nanofiltration, voire même l'osmose inverse.

Les dispositifs de filtration dynamique à disques rotatifs sont connus pour leur capacité à fournir des flux de perméat élevés, et notamment supérieurs à ceux obtenus avec des systèmes de filtration tangentielle classiques, notamment dans le cas de fluides chargés et colmatants. De tels modules permettent également de travailler à de faibles pressions transmembranaires en microfiltration, ce qui présentent un intérêt pour l'extraction de macromolécules à partir de moûts de fermentation ou de lait, l'absence ou la diminution de dépôt facilitant la transmission par la membrane.

De tels modules présentent cependant l'inconvénient d'être complexes (pièces mobiles, difficultés d'étanchéité), ce qui se traduit par des coûts de fabrication nettement plus élevés que les systèmes classiques.

En outre, de tels systèmes ne peuvent être utilisés que dans un domaine de filtration donné, pour une gamme de pressions déterminées, généralement faibles.

Ainsi, le système de séparation dynamique DMF commercialisé par la société PALL, comprenant des stators filtrants à membrane, séparés par des disques rotatifs (ou rotors), ne peut être utilisé qu'à des pressions inférieures ou égales à 3 bars, et pas au-delà, c'est-à-dire en microfiltration uniquement. Les membranes sont déjà assemblées sur les stators et leur montage et démontage est difficile.

La présente invention a donc pour objet un dispositif de filtration dynamique modulaire à disques rotatifs, qui remédie aux inconvénients de l'art antérieur.

La présente invention concerne donc un dispositif de filtration dynamique modulaire à disque rotatif tel que défini par la revendication 1.

Dans des modes de réalisation préférés, dans ce dispositif :
- chaque plaque-support et les membranes disposées de part et d'autre de ladite plaque-support ont la forme d'un disque ;
- le filtre est en céramique.

De manière avantageuse, les plaques-supports selon l'invention ont la forme d'un disque de diamètre d₁ et les membranes disposées de part et d'autre d'une plaque-support selon l'invention ont également la forme d'un disque de même diamètre (diamètre d₁).

De manière avantageuse, le diamètre d₁ varie de 10 à 100 cm.

Par ailleurs, la nature des disques rotatifs ainsi que l'espacement entre chaque disque et la membrane la plus proche dudit disque peuvent être adaptés en fonction du liquide à filtrer et de ses caractéristiques physiques.

Généralement, l'espacement entre chaque disque et la membrane la plus proche dudit disque est compris entre 2 et 20 mm.

Lorsque le module de filtration selon l'invention est utilisé en microfiltration, le flux de perméat est relativement important, généralement de l'ordre de 2 à 10 λ/minute/m² de membrane.

Par conséquent, pour une utilisation en microfiltration, la plaque-support sera avantageusement munie de stries radiales pour faciliter l'évacuation du filtrat.

Selon une autre caractéristique de l'invention, le filtre est une pièce unique en matériau poreux, fritté ou non, de préférence en céramique dont la porosité augmente vers l'intérieur de ladite pièce, de sorte que les membranes sont constituées par les faces de ladite pièce de plus faible porosité, la plaque-support est constituée par la partie centrale de ladite pièce de porosité élevée, et les couches de drainant sont constituées par les parties intermédiaires de porosité moyenne situées entre les faces et la partie centrale de ladite pièce. Le filtre est de préférence en céramique.

De manière préférée, le diamètre d₂ des canalisations est inférieur ou égal à 4 mm, et de préférence de 0,5 à 3 mm, et le diamètre d₃ des conduits est inférieur ou égal à 2 mm.

Selon l'invention, les disques rotatifs sont équipés d'ailettes, de préférence au nombre de 6 à 8 environ, et de 2 à 8 mm de hauteur.

La présence d'ailettes sur les disques rotatifs permet :
- pour une même vitesse de rotation, d'augmenter les performances en filtration par rapport aux disques lisses grâce à un meilleur entraînement du liquide à filtrer, ou
- pour des performances identiques à celles obtenues avec des disques lisses, d'abaisser la vitesse de rotation des disques et donc l'énergie nécessaire à la mise en oeuvre du processus de filtration.

L'invention sera mieux comprise et d'autres buts, avantages et caractéristiques de celle-ci apparaîtront plus clairement à la lecture de la description qui suit, faite en regard des dessins annexés sur lesquels:
La Figure 1 montre en coupe un exemple de dispositif de filtration dynamique selon l'invention comprenant deux filtres séparés par un disque rotatif.
La Figure 2 représente schématiquement trois vues comparatives de filtres utilisables selon l'invention, dont l'un 2A correspond à un exemple de filtre de l'art antérieur et les deux autres 2B et 2C correspondent à deux exemples de filtres selon l'invention.
La Figure 3 représente schématiquement une vue en coupe horizontale selon la ligne I-I de la Figure 1 de la plaque-support d'un filtre de l'art antérieur.
La Figure 4 représente schématiquement une vue en coupe verticale selon la ligne II-II de la Figure 2c d'une moitié de plaque-support d'un filtre selon l'invention.
La Figure 5 représente schématiquement une vue en perspective latérale d'une moitié de plaque-support analogue à celle représentée à la Figure 4.

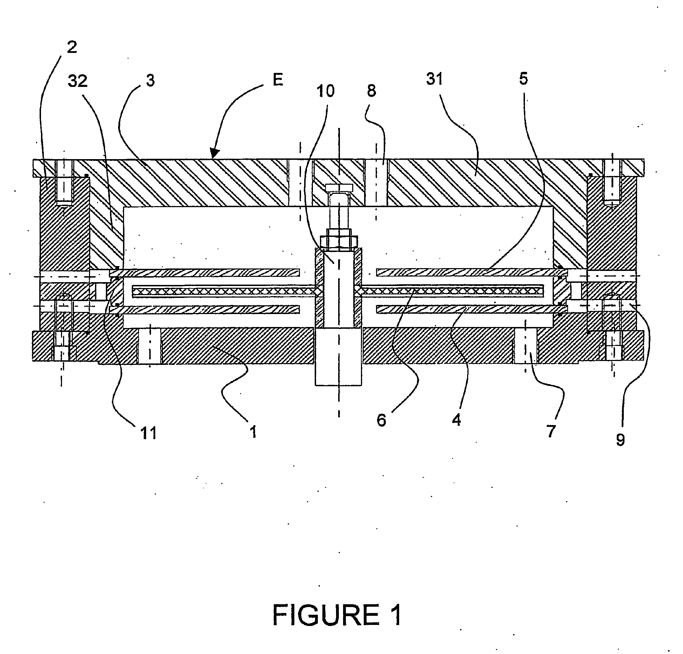

Sur la Figure 1, est représenté un exemple de dispositif de filtration dynamique modulaire selon l'invention comportant une enceinte cylindrique E comprenant une base circulaire 1, une couronne cylindrique 2 reposant sur la base 1 et fermée supérieurement par la face supérieure 31 d'un couvercle 3. La paroi latérale 32 du couvercle 3 peut être emboîtée dans la couronne 2.

Le volume intérieur de l'enceinte est divisé en 3 compartiments (inférieur, intermédiaire et supérieur) par deux filtres en forme de disque stationnaires F₁, F₂, fixés au niveau de leur bordure extérieure à la couronne 2.

Les filtres stationnaires F₁ et F₂ sont séparés par un disque rotatif 6 pouvant tourner à grande vitesse (4000 t/mn). Ce disque rotatif 6 est porté par un arbre central 10 formant l'axe de l'enceinte E. L'arbre 10 est inséré dans un trou central réalisé dans les filtres F₁ et F₂. Lorsque l'arbre 10 portant le disque 6 est animé d'un mouvement de rotation, il entraîne le disque 6 en rotation.

Les filtres F₁ et F₂ séparés par une entretoise 11 placée dans la paroi latérale 32 du couvercle 3 entre les bordures externes des filtres F₁ et F₂.

L'enceinte E contient un ou deux dispositifs d'introduction d'un liquide à traiter traversant la base 1 de l'enceinte E, disposés de manière symétrique de part et d'autre de l'arbre central 10, de sorte que le liquide à filtrer pénètre entre la couronne 2, le filtre F₁ et le disque par le trou central.

La partie du liquide à filtrer traversant le filtre F₁ est le filtrat Fa₁.

Le filtrat Fa₁ est évacué latéralement depuis le filtre F₁ jusqu'à l'extérieur de l'enceinte E, au travers d'un premier dispositif d'évacuation 91 situé dans le prolongement du filtre F₁ et traversant la couronne 2 de l'enceinte E.

La partie du liquide à filtrer qui n'a pas traversé le filtre F₁, et qui est passée à côté de ce filtre F₁ se trouve alors dans le compartiment intermédiaire délimité par le filtre F₂ et le disque.

Les filtres F₁ et F₂ sont séparés par le disque rotatif 6. En fonctionnement, le disque 6 tourne à grande vitesse (4000 t/mn) de manière à produire un cisaillement élevé sur les membranes, qui empêche la formation de dépôts sur les membranes, notamment lors de la filtration de suspensions concentrées de particules.

De même que pour le filtre F₁, la partie du liquide à filtrer retenue par le filtre F₂ est le filtrat Fa₂.

Le filtrat Fa₂ pénétrant le filtre F₁ est évacué latéralement au travers d'un second dispositif d'évacuation 92 situé dans le prolongement du filtre F₂.

La partie du liquide à filtrer qui n'a pas été filtrée par les deux filtres F₁ et F₂ constituent le rétentat.

Le rétentat est éliminé par exemple au travers un dispositif d'évacuation 8, traversant la face supérieure du couvercle 3 de l'enceinte E.

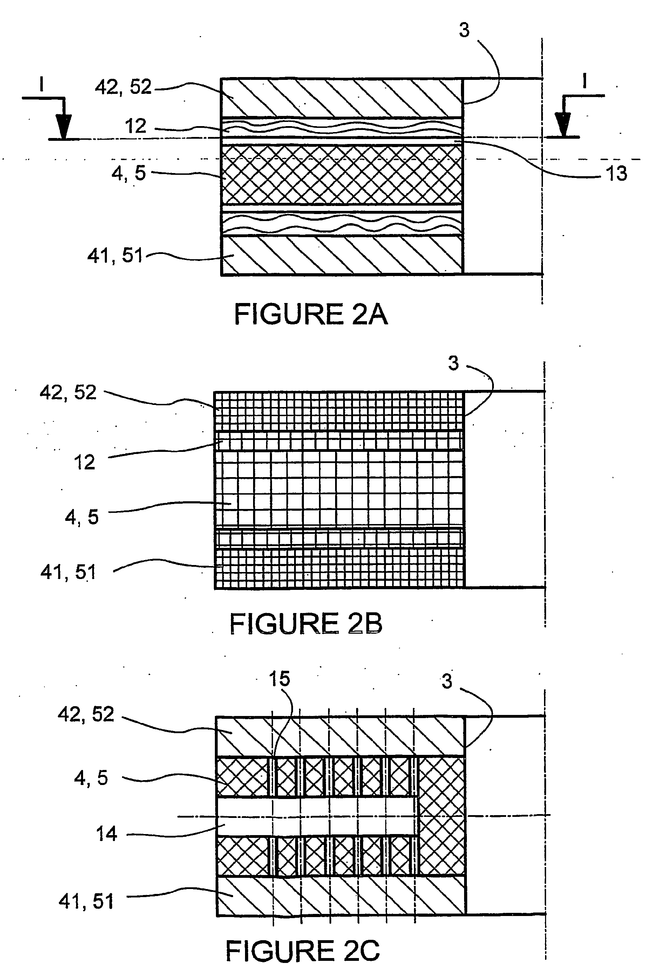

Sur la Figure 2, représentant schématiquement 3 filtres utilisables selon l'invention, sont comparées la structure d'un filtre de l'art antérieur (schéma A) à celles de deux filtres selon l'invention (schémas B et C).

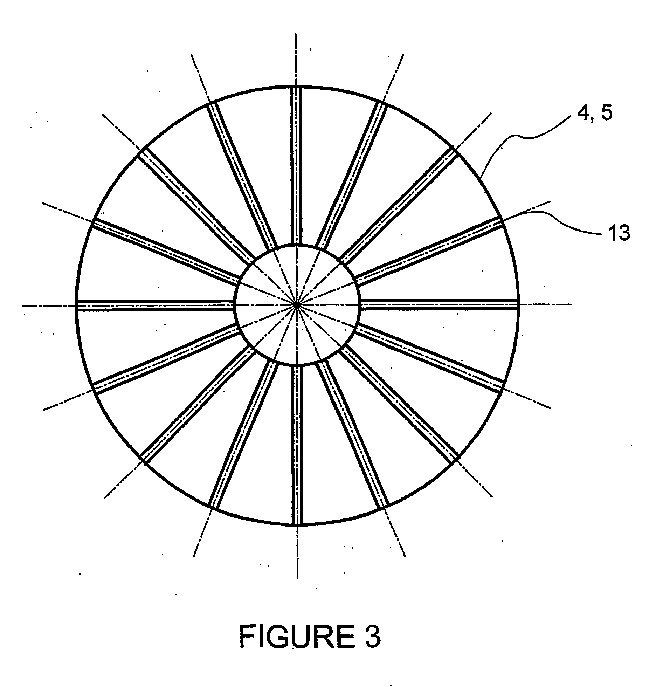

Le schéma A de la Figure 2 montre un filtre de l'art antérieur comprenant une plaque support 4, éventuellement munie de stries radiales (conformément à la Figure 3), sur les faces de laquelle sont disposées successivement une couche de drainant 12 et, une membrane 41, 42.

Le schéma B de la Figure 2 représente schématiquement un exemple de filtre selon l'invention constitué d'une pièce unique en matériau fritté poreux dont la porosité augmente vers l'intérieur de ladite pièce. Les membranes 41, 42 sont constituées par les faces de ladite pièce, car ce sont les parties de la pièce ayant la plus faible porosité. La plaque-support (4, 5) est constituée par la partie centrale de ladite pièce, car cette partie de la pièce présente une porosité élevée. Enfin, les couches de drainant sont constituées par les parties intermédiaires de porosité moyenne situées entre les faces et la partie centrale de ladite pièce. La taille des pores varie de 0,1 nm à 5 µm selon qu'il s'agit d'osmose inverse ou de microfiltration.

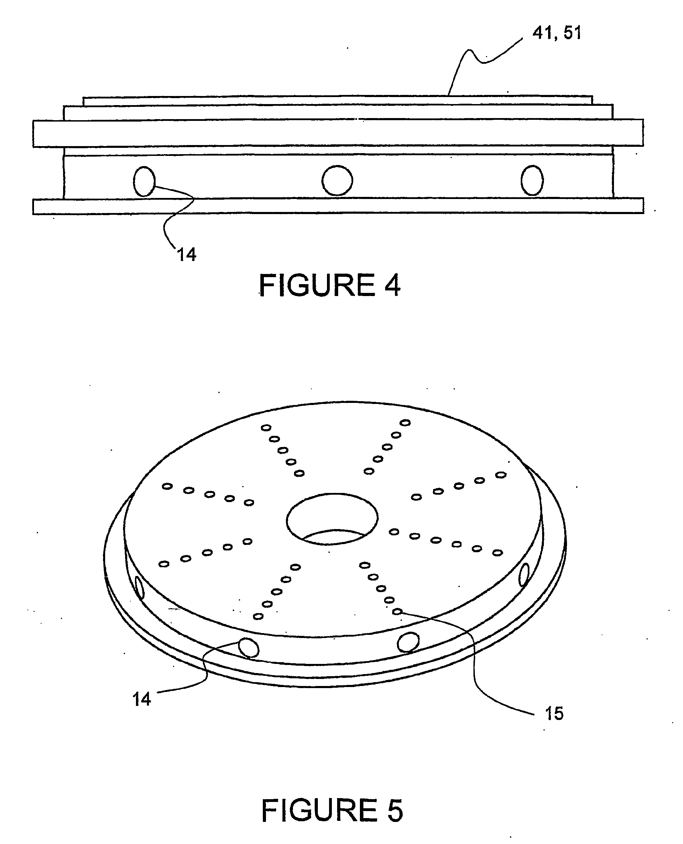

Le schéma C de la Figure 2 ainsi que les Figures 4 et 5 représentent schématiquement un autre exemple de filtre selon l'invention constitué d'une plaque-support munie de canaux radiaux de diamètre d₂, reliés aux faces de la plaque-support par des conduits de diamètres d₃, plus petits que d₂.

## Revendications

1. Dispositif de filtration dynamique à disque rotatif comprenant :
• une enceinte cylindrique (E) comportant :
- une base (1), une couronne (2) et un couvercle (3), ledit couvercle (3) comprenant une face supérieure (31),
- au moins deux filtres F₁ et F₂ divisant l'enceinte en au moins trois compartiments, chacun desdits filtres comprenant une plaque-support (4, 5) stationnaire fixée à l'enceinte (E), et deux membranes (41, 42, 51, 52) disposées de part et d'autre de la plaque-support (4, 5), deux plaques-supports (4, 5) consécutives étant séparées par une entretoise (11),
- au moins un disque (6) rotatif disposé entre deux filtres consécutifs,
- au moins un dispositif commun d'introduction (7) d'un liquide à filtrer, ledit dispositif d'introduction (7) traversant soit la base (1) de l'enceinte E, soit le couvercle (3),
- au moins un dispositif commun d'évacuation (8) du rétentat obtenu à partir du liquide à filtrer, ledit dispositif d'évacuation du rétentat (8) traversant la face supérieure du couvercle (3) de l'enceinte E ou la base (1),
- au moins deux dispositifs d'évacuation (9) du filtrat obtenu à partir du liquide à filtrer, lesdits dispositifs d'évacuation (9) traversant la couronne (2) de l'enceinte (E),
• un arbre (10) formant l'axe de ladite enceinte (E), portant le ou les disques (6) et étant inséré dans un trou central réalisé dans les filtres F1 et F2, ledit arbre (10) pouvant être animé d'un mouvement de rotation,
• les membranes sont choisies parmi les membranes de microfiltration, les membranes d'ultrafiltration, les membranes de nanofiltration et les membranes d'osmose inverse,
• le dispositif de filtration dynamique est modulaire,
• les entretoises (11) sont aptes à faciliter le montage et démontage des plaques-supports (4, 5), modifier le nombre de compartiments, assurer l'étanchéité et permettre de modifier l'espace disque-membrane,
**caractérisé en ce que :**
• ledit couvercle (3) comprend une paroi latérale (32) qui peut être emboîtée dans ladite couronne (2),
• les plaque-supports (4, 5) sont munies d'au moins deux canalisations (14) de diamètre d₂ pour évacuer latéralement le perméat,
• les canalisations (14) sont radiales et sont reliées à chaque face de la plaque-support (4, 5) par des conduits (15) de diamètre d₃, le diamètre d₃ des conduits (15) étant inférieur au diamètre d₂ des canalisations (14),
• le disque (6) est muni d'ailettes ayant une hauteur comprise entre 2 mm et 8 mm, le disque pouvant tourner jusqu'à 4000 t/mn.

2. Dispositif de filtration la revendication 1, **caractérisé en ce que** chaque plaque-support (4, 5) et les membranes (41, 42, 51, 52) disposées de part et d'autre de ladite plaque-support (4, 5) ont la forme d'un disque.

3. Dispositif de filtration selon l'une quelconque des revendications 1 ou 2, **caractérisé en ce que** le filtre est en céramique.

## Claims

1. A rotary disk dynamic filtration device comprising:
- a cylindrical enclosure (E) including:
- a base (1), a crown (2) and a lid (3), said lid (3) comprising an upper face (31),
- at least two filters F₁ and F₂ dividing the enclosure into at least three compartments, each of said filters comprising a supporting plate (4, 5) stationary fixed to the enclosure (E), and two diaphragms (41, 42, 51, 52) arranged on either side of the supporting plate (4, 5), two supporting consecutive plates (4, 5) being separate by a spacers (11),
- at least one rotary disk (6) arranged between two consecutive filters,
- at least one common device for injecting (7) of a liquid to be filtered, said injection device (7) running through either the base (1) of the enclosure E, or the lid (3),
- at least one common device for discharging (8) the residue obtained from the liquid to be filtered, said residue discharging device (8) running through the upper face of the lid (3) of the enclosure E or the base (1),
- at least two devices for discharging (9) the filtrate obtained from the liquid to be filtered, said discharging devices (9) running through the crown (2) of the enclosure (E),
- a shaft (10) forming the axis of said enclosure (E) carrying the disk(s) (6) and liable to be driven into rotation,
- the diaphragms are selected among microfiltration diaphragms, ultrafiltration diaphragms, nanofiltration diaphragms and reverse osmosis diaphragms,
- the dynamic filtration device is modular,
- the spacers (11) are able to make easier the assembly and disassembly of the supporting plate (4, 5), permit the modification of the number of compartments, ensure the tightness and permit the modification of the disk-diaphragm space,
**characterised in that**:
- said lid (3) comprises a side wall (32) which may be fitted into said crown (2),
- the supporting plate (4, 5) comprises at least two ducts (14) with diameter d₂ for lateral discharge of the permeate,
- the ducts (14) are radial and are connected to each face of the supporting plate (4, 5) by conduits (15) with diameter d₃, the diameter d₃ of the conduits (15) being smaller than the diameter d₂ of the ducts (14),
- the disk (6) comprises fins having from 2 mm to 8 mm in height, said disk being able to rotate at 4000 t/mn.

2. A filtration device according to claim 1, **characterised in that** each supporting plate (4, 5) and the diaphragms (41, 42, 51, 52) arranged on either side of said supporting plate (4, 5) are in the form of a disk.

3. A filtration device according to claims 1 or 2, **characterised in that** the filter consists of ceramic.

## Patentansprüche

1. Drehscheibenvorrichtung zur dynamischen Filtration mit:
• einem zylindrischen Gehäuse (E), welches aufweist:
- eine Basis (1), einen Kranz (2) und einen Deckel (3), wobei der Deckel (3) eine Oberseite (31) aufweist,
- mindestens zwei Filter F₁ und F₂, welche das Gehäuse in mindestens drei Abteilungen unterteilen, wobei jeder Filter eine an dem Gehäuse (E) befestigte stationäre Trägerplatte (4, 5) und zwei Membranen (41, 42, 51, 52) aufweist, die zu beiden Seiten der Trägerplatte (4, 5) angeordnet sind, wobei zwei aufeinanderfolgende Trägerplatten (4, 5) durch einen Abstandhalter (11) voneinander beabstandet sind,
- mindestens eine Drehscheibe (6), welche zwischen zwei aufeinanderfolgenden Filtern angeordnet ist,
- mindestens eine gemeinsame Vorrichtung (7) zum Einlassen einer zu filternden Flüssigkeit, wobei die Einlassvorrichtung (7) entweder die Basis (1) des Gehäuses E oder den Deckel (3) durchquert,
- mindestens eine gemeinsame Vorrichtung (8) zum Auslassen des aus der zu filternden Flüssigkeit erhaltenen Retentats, wobei die Auslassvorrichtung (8) die Oberseite des Deckels (3) des Gehäuses E oder die Basis (1) durchquert,
- mindestens zwei Vorrichtungen (9) zum Auslassen des aus der zu filternden Flüssigkeit gewonnenen Filtrats, wobei die Auslassvorrichtungen (9) den Kranz (2) des Gehäuses (E) durchqueren,
• einer die Achse des Gehäuses (E) bildenden Welle (10), welche die Scheibe oder die Scheiben (6) trägt und in ein in den Filtern F₁ und F₂ ausgebildetes Mittelloch eingesetzt ist, wobei die Welle (10) drehend antreibbar ist,
• wobei die Membranen unter Mikrofiltrationsmembranen, Ultrafiltrationsmembranen, Nanofiltrationsmembranen und Umkehrosmosmembranen ausgewählt sind,
• wobei die Vorrichtung zur dynamischen Filtration modular ist,
• wobei die Abstandhalter (11) geeignet sind, die Montage und die Demontage der Trägerplatten (4, 5) zu vereinfachen, die Anzahl der Abteilungen zu ändern, die Dichtigkeit zu gewährleisten und den Raum zwischen Scheibe und Membran zu verändern,
**dadurch gekennzeichnet, dass**
• der Deckel (3) eine Seitenwand (32) aufweist, welche in den Kranz (2) einsetzbar ist,
• die Trägerplatten (4, 5) mit mindestens zwei Kanälen (14) mit einem Durchmesser d₂ versehen sind, um das Permeat seitlich auszulassen,
• die Kanäle (14) radial sind und mit jeder Seite der Trägerplatte (4, 5) durch Leitungen (15) mit einem Durchmesser d₃ verbunden sind, wobei der Durchmesser d₃ der Leitungen (15) kleiner als der Durchmesser d₂ der Kanäle (14) ist,
• die Scheibe (6) mit Rippen versehen ist, welche eine Höhe zwischen 2 mm und 8 mm aufweisen, wobei die Scheibe mit bis zu 4000 U/min drehen kann.

2. Filtrationsvorrichtung nach Anspruch 1, **dadurch gekennzeichnet, dass** jede Trägerplatte (4, 5) und die zu beiden Seiten der Trägerplatte (4, 5) angeordneten Membranen (41, 42, 51, 52) die Form einer Scheibe haben.

3. Filtrationsvorrichtung nach einem der Ansprüche 1 oder 2, **dadurch gekennzeichnet, dass** der Filter aus Keramik besteht.
